# EUROPEAN PATENT APPLICATION

(11) **EP 1 133 122 A2**
(43) Date of publication of application: **12.09.2001**
(21) Application number: 01302055.7
(22) Date of filing: 06.03.2001
(51) Int. Cl.: H04L 12/64

(54) **Transmission method, transmission system, transmission control unit and input unit**

(30) Priority: 07.03.2000 JP 2000062514
(71) Applicant: SONY CORPORATION, Tokyo 141 (JP)
(72) Inventor: Igarashi, Tatsuya, c/o Intellectual Property Dept., Shinagawa-ku, Tokyo 141 (JP); Endo, Atsushi, c/o Intellectual Property Dept., Shinagawa-ku, Tokyo 141 (JP); Ihara, Yushi, c/o Intellectual Property Dept., Shinagawa-ku, Tokyo 141 (JP)
(74) Representative: Turner, James Arthur

(57) **Abstract**

Being capable of avoiding a problem due to unmatching of versions among devices upon data transmission through a network such as IEEE1394 type. In case where data obtained in an output device connected to a predetermined network is transmitted from the output device to the network and received by an input device connected to the network, the output device or a controller for controlling transmission on the network sends a first instruction for inquiring about the version of a function set in the input device and recognizes the version set in the input device through return transmission corresponding to the first instruction. If the version of the confirmed input device is lower than the version set in the output device or controller, a second instruction for changing the version to be set in the input device is transmitted so as to change the version and then, transmission of data from the output device is started.

## Description

The present invention relates to a transmission method and transmission system preferably used for connecting a plurality of units through, for example, IEEE (The Institute of Electrical and Electronics Engineers) 1394 type bus line for carrying out data transmission among those units, and transmission control unit and input unit necessary for building up the same transmission system.

AV apparatus capable of transmitting information from one to the other through a network using IEEE1394 type serial data bus has been developed. For transmitting data through this bus, isochronous transmission mode used for real-time transmission of relatively large volume animation data, audio data and the like and asynchronous transmission mode used for transmitting still image, text data, control command and the like are prepared. A band dedicated for each mode is used for transmission and transmissions in both modes can coexist on a single bus.

If an example realized by transmitting data among plural devices connected through such bus is picked up, for example, it is possible to connect a video signal source such as a video camera and digital still camera to a printer unit through the bus, so that the still image outputted from the video signal source can be printed through a printer unit. Transmission of the still image data for such print is carried out in asynchronous transmission mode. When data transmission is carried out in asynchronous transmission mode, a unit on the side of data transmission (output device) is called producer and a unit on the side of data reception (input device) is called consumer. Further, a transmission control unit for controlling data transmission between the producer and the consumer is called controller. The producer or consumer may sometimes act as the controller at the same time.

In case where audio unit or video unit is connected to the IEEE1394 type serial data bus so as to transmit data among the units, control command transmission system called AV/C command (AV/C Command Transaction Set) can be applied. The detail of this command may be found in "AV/C Digital Interface Command Set General Specification Version 3.0, April 15, 1998).

To carry out the aforementioned print processing or the like by connecting plural devices through the IEEE1394 type serial data bus, the versions of processing functions set in the producer and consumer needs to coincide with each other. If for example, the consumer is a printer, the type of image data which can be printed by that printer is specified for each version. The type of image data which the producer can transmit may be different depending on the version. In this case, if the versions do not coincide with each other between the producer and the consumer, data outputted from the producer cannot be printed out.

The problem that system is not actuated due to unmatching of the versions may be caused by updating of the version of the device. In case of a device whose control function can be updated, updating of the version may be carried out by updating its control program. It is possible to handle new format data by updating the version each time. However, sometimes it comes that part of old data cannot be processed by updating the version. More specifically, if two processing functions, namely new format data processing function and old format data processing function cannot coexist, ordinary updating allows only new format data processing function to be set while the old format data processing function prepared by the version prior to the updating is deleted.

If processing disable due to such unmatcing of versions, specifically processing disable accompaniad by updating of the version is generated between devices connected through a network such as the IEEE1394 type bus, conventionally, user has to operate for changing the version of a corresponding device independently, so that he cannot cope with so quickly.

Various respective aspects and features of the invention are defined in the appended claims.

Embodiments of the present invention can provide a means for avoiding a problem about unmatching of the versions between devices easily upon transmission through the IEEE1394 type network or the like.

According to the present invention, in case where data obtained in an output device connected to a predetermined network is transmitted from the output device to the network and received by an input device connected to the network, the output device or a controller for controlling transmission on the network sends a first instruction for inquiring about the version of a function set in the input device and recognizes the version set in the input device through return transmission corresponding to the first instruction. If the version of the confirmed input device is lower than the version set in the output device or controller, a second instruction for changing the version to be set in the input device is transmitted so as to change the version and then, transmission of data from the output device is started.

According to the present invention, a change of the version of an input device connected through the network to a lower level version corresponding to an output device is automatically carried out based on an instruction from the controller.

The invention will now be described by way of example with reference to the accompanying drawings, throughout which like parts are referred to by like references, and in which:
FIG. 1 is a block diagram showing an example of an entire structure of system according to an embodiment of the present invention;
FIG. 2 is a block diagram showing an example of the structure of a digital still camera according to an embodiment of the present invention;
FIG. 3 is a block diagram showing an example of the structure of a printer according to an embodiment of the present invention;
FIG. 4 is a block diagram showing an example of the structure of a digital TV unit according to an embodiment of the present invention;
FIG. 5 is a block diagram showing an example of the structure of a consumer device (printer) as viewed from standpoint of transmission according to an embodiment of the present invention;
FIG. 6 is an explanatory diagram showing an example of transmission according to an embodiment of the present invention;
FIG. 7 is an explanatory diagram showing an example of data in transmission packet according to an embodiment of the present invention;
FIG. 8 (drawn as FIGS. 8A to 8C) is an explanatory diagram showing an example of data structure according to an embodiment of the present invention;
FIG. 9 is an explanatory diagram showing an example of the structure of command and response for version inquiry according to an embodiment of the present invention;
FIG. 10 is an explanatory diagram showing an example of version information according to an embodiment of the present invention;
FIG. 11 is an explanatory diagram showing an example of profile ID according to an embodiment of the present invention;
FIG. 12 is an explanatory diagram showing an example of the structure of command and response for version change according to an embodiment of the present invention;
FIG. 13 is a timing chart showing an example of processing in case where the version is changed for data transmission according to an embodiment of the present invention.
FIG. 14 is an explanatory diagram showing an example of updating of the version maintaining low-level compatibility;
FIG. 15 is an explanatory diagram showing an example of updating of the version without low-level compatibility;
FIG. 16 is an explanatory diagram showing an example of updating of the version with profile; and
FIG. 17 is an explanatory diagram showing an example of updating of the version with profile.

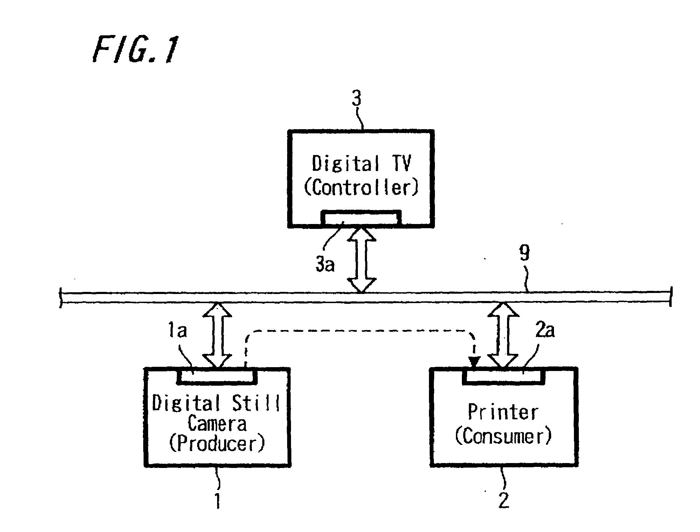

Hereinafter, an embodiment of the present invention will be described with reference to FIGS. 1-17.

FIG. 1 is a block diagram showing a connecting structure of transmission system according to an embodiment of the present invention. In this example, a plurality of units 1, 2, 3 each having a terminal, which can be connected to a bus line 9 specified by the IEEE1394 interface system, are connected to each other through the bus 9. The units 1-3 prepared are a digital still camera 1 capable of memorizing still image data (or animation data) fetched in by picture taking action into a prepared memory medium, a printer 2 capable of printing out the still image data (or image data in a frame or a field in animation data) on paper and a digital TV unit 3 capable of receiving digital broadcasting and displaying images.

At least one of the units 1-3 connected to the bus 9 has a function as a controller for controlling communication on the bus 9. Here, the digital TV unit 3 is set so as to function as the controller. In a following description, a unit for transmitting data to the bus 9 is sometimes called producer and a unit for receiving data is sometimes called consumer. In this example, an example of transmission in case where the digital still camera 1 is a producer while the printer 2 is a consumer will be described.

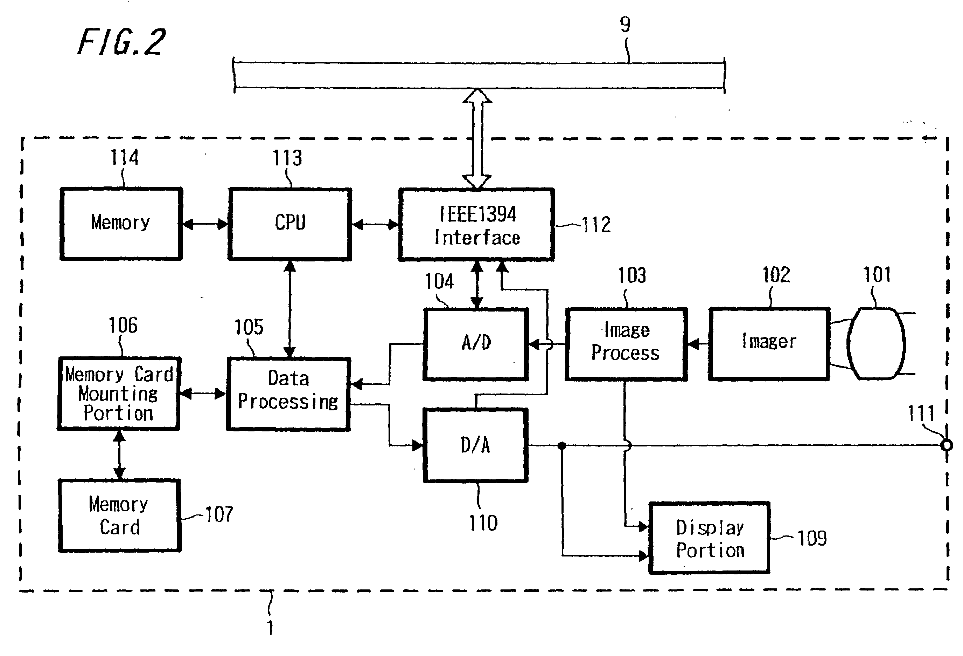

FIG. 2 shows the structure of the digital still camera 1. The digital still camera 1 is a recording/reproducing apparatus capable of memorizing an image signal obtained by picture taking in a memory medium as still image data of a specified method (for example, DV method) and reading the memorized still image data.

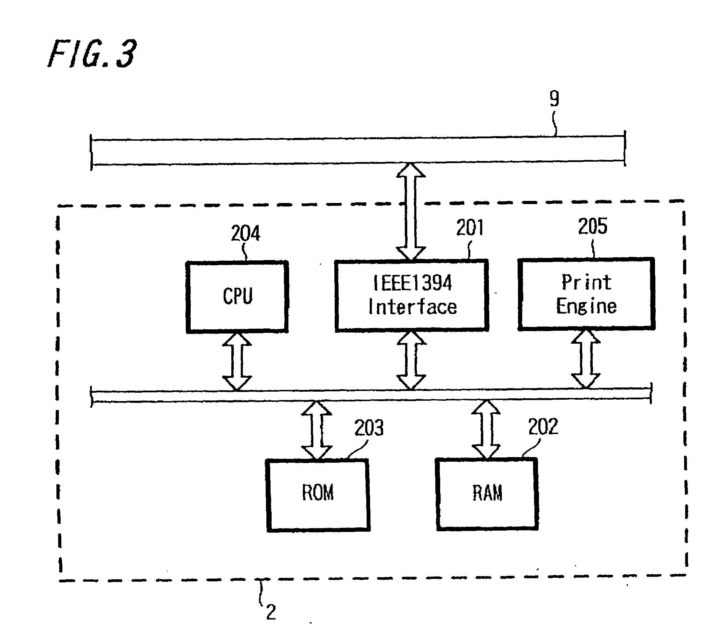

As shown in FIG. 3, image light focused on an image pickup face of an imager 102 through an optical system 101 is converted to electric image pickup signal and the image pickup signal outputted from the imager 102 is supplied to an image processing portion 103. The image processing portion 103 processes a supplied image pickup signal and supplied the processed signal to a data processing circuit 105 through an analog/digital converter 104. The data processing circuit 105 processes it to still image data based on a specified format and memorizes the obtained still image data in a memory card 107 loaded on a memory card mounting portion 106. This memory card 107 incorporates a semiconductor memory having a specified capacity in a stick-like resin package.

It is permissible to read out still image data memorized in the memory card 107 to the data processing circuit 105, supply the still image data to the digital/analog converter 110, convert it to analog video signal of a specified format and then output it from an output terminal 111. At the time of taking picture or read-out of memory data, video image can be displayed on a display portion 109, which is a monitor provided on the still camera 1.

Further, still image data supplied to the analog/digital converter 104 or digital/analog converter 110 can be supplied to the IEEE1394 interface portion 112 so that it can be transmitted to a connected bus 9 as digital video data.

Taking-picture action and read-out action in the circuit are carried out by control by a central control unit (CPU) 113. Transmission of data from the IEEE1394 interface portion 112 to the bus 9 and reception of data by the interface 112 from the bus 9 are carried out by control of the CPU 113. A memory 114 for storing data necessary for control is connected to the CPU 113.

FIG. 3 shows the structure of the printer 2. The printer 2 of this example has a structure containing an IEEE1394 interface portion 201 so as to enable data transmitted through the bus 9 to be printed out. This printer 2 comprises a central control unit (CPU) 204, a RAM 202 for storing printing data temporarily, a ROM 203 for storing data necessary for printing control and a print engine 205 for executing printing action, and these components are connected through an internal bus.

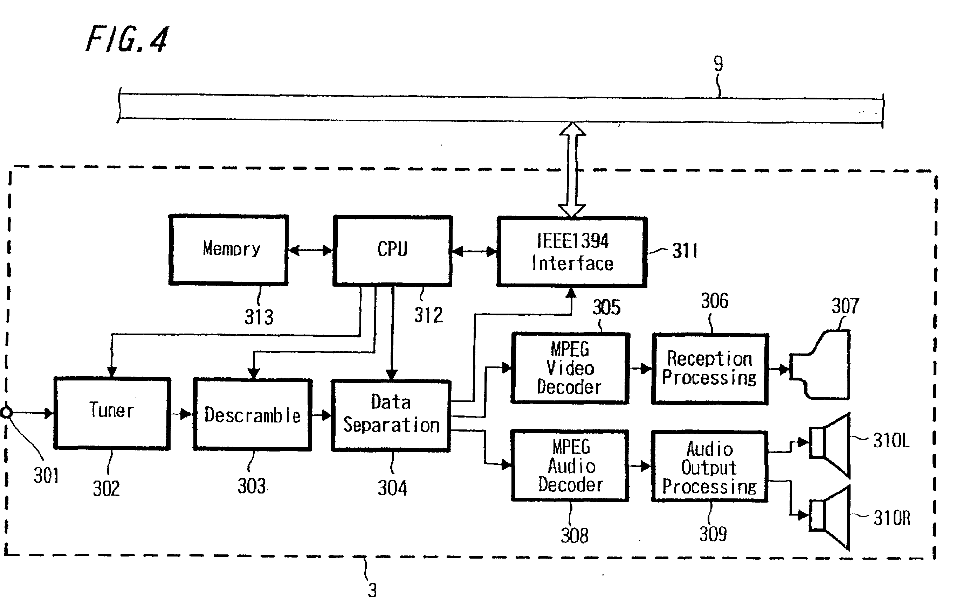

FIG. 4 shows the structure of a digital TV unit 3. The digital TV unit 3 contains an input terminal 301 to which antenna or cable TV signal line is connected, and receives and processes a signal obtained by a terminal 301 through a turner 302 so as to receive broadcasting wave of a specified channel. The signal received by the turner 302 is subjected to a processing for releasing scramble made in broadcasting data by a descramble circuit 303. The descrambled data is supplied to a data separating portion 304 and a desired data is extracted from data multiplexed in a channel.

Video data separated by the data separating portion 304 is supplied to a MPEG video decoder 305 and after decoding processing based on the MPEG system is carried out, it is supplied to a reception processing portion 306, which carries out processing for displaying video image on a display means 307 such as a cathode ray tube. Audio data separated by the data separating portion 304 is supplied to an MPEG audio decoder 308. After decoding processing based on the MPEG system is carried out, it is supplied to an audio output processing portion 309, so as to carry out processing for outputting audio (voice) from speakers 310L, 310R incorporated (or attached outside) in the TV unit.

The TV unit 3 of this example is provided with an IEEE1394 interface portion 311, so that video data and audio data based on the MPEG system can be transmitted to the connected bus 9. If other data broadcasting channel is received, the received data can be transmitted from the IEEE1394 interface 311 to the bus 9.

The receiving action and transmission action to the bus 9 are controlled by control of a central control unit (CPU) 312. Transmission of data from the IEEE1394 interface portion 311 to the bus 9 and reception of data from the bus 9 by the interface portion 311 are carried out by control by the CPU 312. A memory 313 for memorizing data necessary for control is connected to the CPU 312.

The TV unit 3 of this example functions as a controller on network composed of the bus 9 and the CPU 312 is so constructed as to execute the function of the controller.

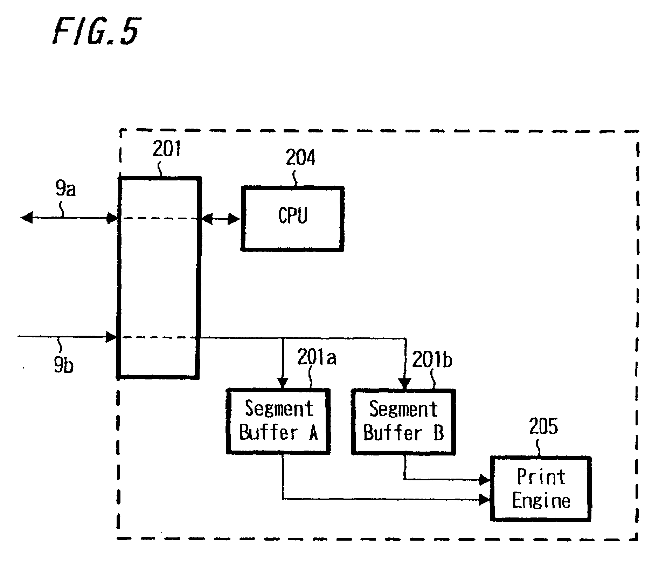

In case of data transmission in asynchronous transmission mode based on the IEEE1394 system among respective units 1, 2, 3 connected to the bus 9, it can be considered that a transmission structure for flow control data necessary for transmission control, a structure (in case of producer) for. transmission of output data or a structure (in case of consumer) for receiving input data are provided. FIG. 5 shows an example of the structure of the printer 2, which is an example of the consumer device as viewed from standpoint of transmission processing. Data to be transmitted through the bus 9 includes flow control data 9a necessary for control and segment data 9b which is data (still image data) to be transmitted actually. The segment data 9a is data to be transmitted in the unit of segment, which is a unit capable of being transmitted at e.g. isochronous transmission mode.

The flow control data 9a is received directly by the CPU 204 through the interface portion 201. This flow control data includes handling of commands and responses specified by the AV/C command. A processing for establishing a connection with other device is executed with data to be transmitted between the CPU 204 and outside based on the AV/C command. Further, a processing about a version to be set in a device is executed according to data based on the AV/C command, transmitted between the CPU 204 and outside. The processing for this version will be described later.

Segment data 9b obtained from the interface portion 201 is transmitted directly to segment buffers 201a, 201b by a processing called direct memory access (DMA) and then transmitted from the segment buffers 201a, 201b to a data processing portion such as a print engine 205. The segment. buffers 201a, 201b are set in a predetermined area within a register composing an input plug and different from the RAM 502 in the printer shown in FIG. 3. Although an example in which two segment buffers are provided has been shown in FIG. 5, in some case, a segment buffer is set up and in other case, plural segment buffers are set up.

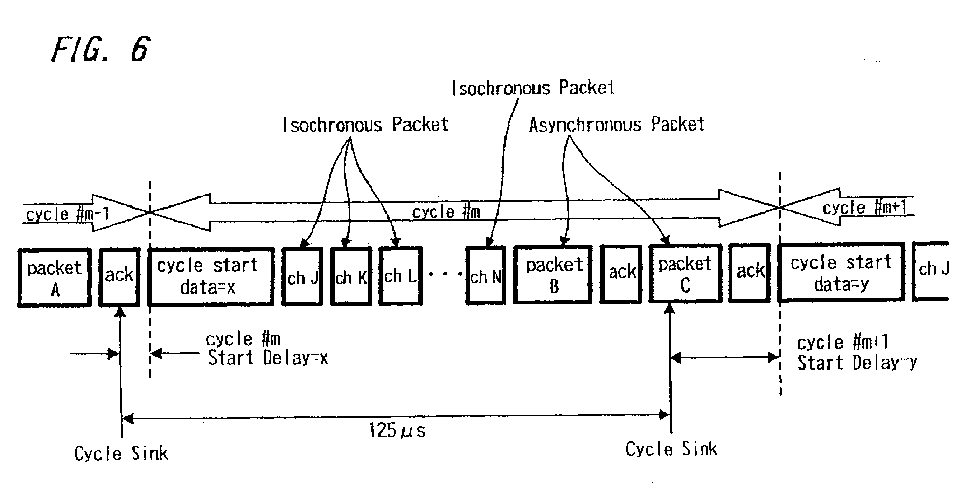

Data transmission condition through the bus 9 based on the IEEE1394 system, to which the above described units are connected, will be described. FIG. 6 is a diagram showing the cycle structure of data transmission by a unit connected through the IEEE1394. In the IEEE1394, data is divided to packets, which are transmitted by time division control based on the cycle of 125*µ*s long. This cycle is created by a cycle start signal supplied from a node (any unit connected to the bus) having cycle master function. Isochronous packet secures a band (which is called band although it is time unit) necessary for transmission from a head of all cycles. Therefore, in the isochronous transmission, data transmission in a specific time is ensured. However, there is no system for protection if a transmission error is generated, so that the data is lost. If as a result of arbitration, a node securing the bus uses acknowledge and retry in asynchronous transmission for transmitting an asynchronous packet at a time not used for isochronous transmission of each cycle, secure transmission is ensured, however transmission timing is not made constant.

For a predetermined node (unit) to carry out isochronous transmission, that node must correspond to isochronous function. Further, at least one node corresponding to isochronous function must have cycle master function. Further, at least one node connected to the IEEE1394 SIRIAS bus must have a function of the isochronous resource manager. A unit having the function of the isochronous resource manager corresponds to the above described controller.

The system of this example is capable of controlling each unit and judging a status by using AV/C command specified as a command for controlling a unit connected through the IEEE1394 SIRIAS bus. Data for use in this AV/C command will be described.

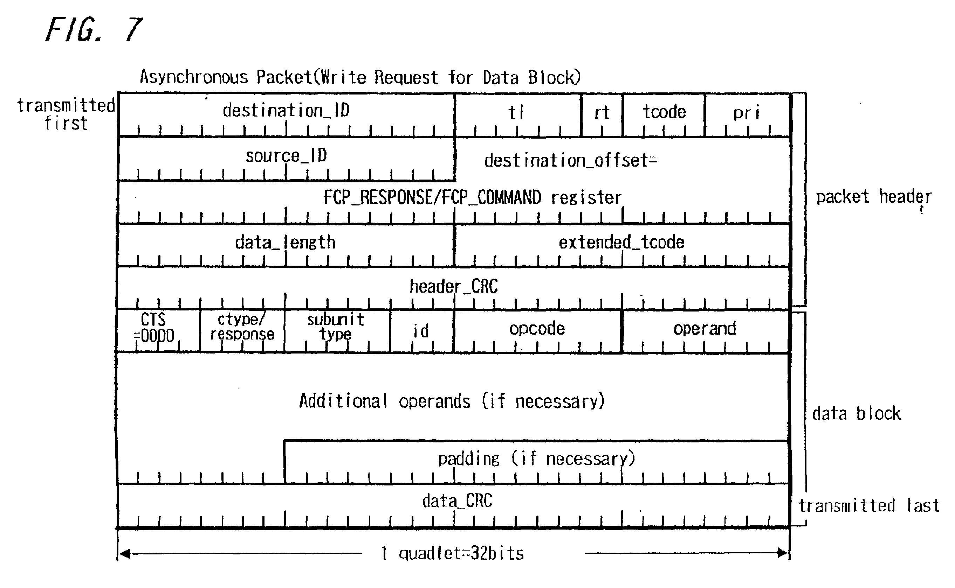

FIG. 7 shows a data structure of a packet to be transmitted at asynchronous transmission mode of the AV/C command. The AV/C command is a command set for controlling an AV unit and CTS (command set ID) is "0000". AV/C command frame and response frame are exchanged between nodes. A response to the command is specified to be carried out in 100 ms in order to protect the bus and AV unit from being loaded. As shown in FIG. 7, asynchronous packet data is constructed of 32 bits (1 quadlet) in a horizontal direction. An upper portion of the same Figure indicates a header portion of the packet and a lower portion thereof indicates data block. destination (ID destination ID) indicates a destination.

CTS indicates ID of command set and in case of the AV/C command set, CTS is "0000". ctype/response (command type/ response) field indicates a functional classification of command in case where the packet is command and indicates a processing result of command in case where the packet is a response.

The command is largely defined in four types, that is, (1) command (CONTROL) for controlling the function from outside, (2) command (STATUS) for inquiry for condition from outside, (3) command (GENERAL INQUIRY (absence/presence of opcode support) and SPECIFIC INQUIRY (absence/presence of opcode and operands support)) for inquiry for absence/presence of control command support from outside, and (4) command (NOTIFY) which requests to notify outside of a condition change.

A response is returned corresponding to a command type. The responses to CONTROL command are NOT IMPLEMENTED (not implemented), ACCEPTED (accepted), REJECTED (rejected) and INTERIM (interim). The responses to STATUS command are NOT IMPLEMENTED, REJECTED, IN TRANSMISSION (in transmission) and STABLE (stable). The responses to GENERAL INQUIRY and SPECIFIC INQUIRY command are IMPLEMENTED (implemented), and NOT IMPLEMENTED. The responses to NOTIFY command are NOT IMPLEMENTED, REJECTED, INTERIM and CHANGED (changed).

Subunit type (subunit type) is provided to specify the function of the unit and allocated to each unit, for example, tape recorder/player (tape recorder/player), tuner (tuner) and the like. To determine if plural subunits (subunits) of the same type exist, addressing is carried out with subunit id (subunit ID) as a determination number. opcode indicates a type of command and operand indicates command parameter. Additional operands are fields to be added as required. padding is also a field to be added as required. data CRC (Cyclic Redundancy Check) is used for error check during data transmission.

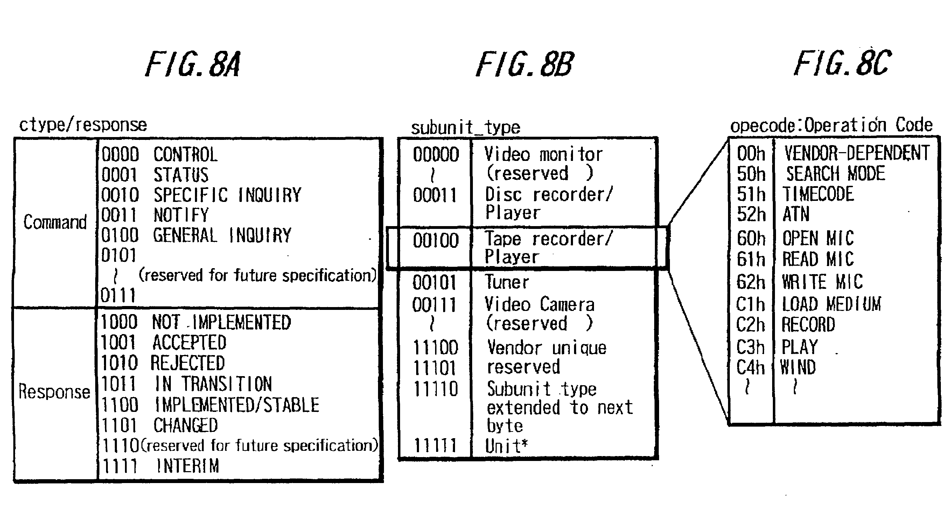

FIG. 8 shows concrete examples of the AV/C command. FIG. 8A shows examples of ctype/response. A upper portion of this diagram shows commands while a lower portion thereof shows responses. CONTROL is allocated to "0000", STATUS "0001", SPECIFIC INQUIRY "0010", NOTIFY "0011", GENERAL INQUIRY "0100". "0101" - "0111" are reserved for future specification. Further, NOT IMPLEMENTED is allocated to "1000", ACCEPTED "1001", REJECTED "1010", IN TRANSMISSION "1011", IMPLEMENTED/STABLE "1100", CHNGED "1101" and INTERIM "1111". "1110" is reserved for future specification.

FIG. 8B shows examples of subunit type. Video Monitor is allocated to "00000", Disk recorder/Player "00011", Tape recorder/Player "00100", Tuner "00101", Video Camera "00111", Vendor unique "11100" and Subunit type extended to next byte "11110".

Although not shown, a sub-unit type may be set up for other devices. For example, the sub-unit type may be allocated to the digital camera and printer shown in FIG. 1. In this case, in some case, a specified sub-unit type is allocated while in other case, a sub-unit type particular to each manufacturer is allocated as the aforementioned [Venor unique]. Although unit is allocated to "11111", this is used for a case for transmission to just a device, for example, for power ON/OFF.

FIG. 8C shows examples of opcode. opcode table exists for each subunit type and this indicates opcode in case where subunit type is Tape recorder/Player. Further, operand is defined for each opcode. Here, VENDOR-DEPENDENT is allocated to "00h", SEACH MODE "50h", TIME CODE "51h", ATN "52h", OPEN MIC "60h", READ MIC "61h", WRITE MIC "62h", LOAD MEDIUM "C1h", RECORD "C2h", PLAY "C3h" and WIND "C4h".

Units connected to the bus are controlled using the AV/C command specified in this way, so that data is transmitted between units connected through the bus according to that control.

Next, an example of data transmission between devices connected through the bus will be described. In this example, a command/a response for confirmation of the version by inquiry to a mating device and a command/a response for requesting the mating device to change the version are prepared.

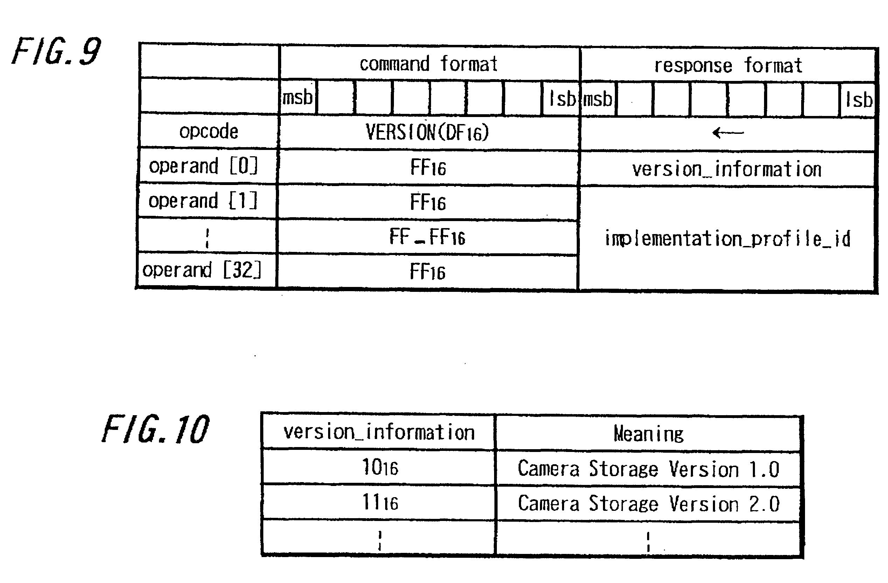

FIG. 9 is a diagram showing data structure of the command for inquiry about the version and the response to that command. Data shown in FIG. 9 is disposed between opcode and operand in data block within a packet of the AV/C command shown in FIG. 7. The left side of this diagram shows the structure of command while the right side thereof shows the structure of response to the command. An arrow indicating the left side in the response side of this diagram indicates a case where data transmitted with a command is disposed just as it is and sent back. In a following description of data examples, all the values are expressed by a hexadecimal number (a value indicating a digit with a hexadecimal value such as 0, 1, ... 9, A, B, C, D, E, F.

Because this command is a command for inquiring a mating device about condition thereof, its command type is a status (STATUS). Data indicating that it is VERSION (version) command is disposed in opcode section indicating the detail of the command. A particular predetermined value (maximum value FF of two-digit hexadecimal value) is disposed in sections of operand[0]-[32].

In case of answering the inquiry about the version through a response on the side receiving this command, the response type is accept (ACCEPTED). Then, VERSION (version) data is sent back in opcode section. Version information (version information) data is disposed in operand[0] section. This version information data is data about a set version or version information. Implementation profile ID (implementation profile ID) called profile ID is disposed in operand [1]-[32] sections, indicating a detail of function which can be executed by the version set in this device. If an inquiry about the command cannot be answered, the response type is, for example, reject (REJECTED) indicating rejection.

FIG. 10 is a diagram showing an example of information or version disposed in operand[0] section. This is an example of version information relating to camera storage device ( digital camera). A value 10 indicates version 1.0 and a value 11 indicates version 2.0. Particular values are allocated to versions prepared subsequently. The version information is allocated to each of other devices such as a printer individually.

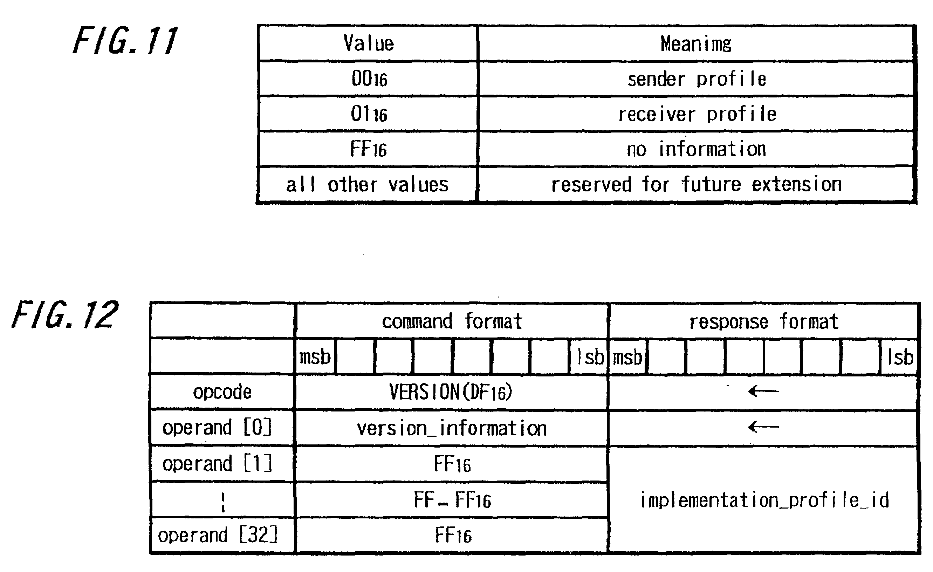

FIG. 11 is a diagram showing an example of profile disposed in operand[1]-[32] sections. Here, a value 00 indicates a sending function profile (sender profile) indicating that a function for sending data to other device on the bus (that is, function as a producer) is provided. Further, a value 01 indicates a receiving function profile (receiver profile) for receiving from other device on the bus (that is, function as a consumer) is provided. A value FF indicates that there is no information for use in guide about the profile. The other values are undefined here.

The profile IDs for all functions to be set in a device are disposed in a response. For example, if both the function as a producer and the function as a consumer are provided, a value 00 is disposed in operand[1] section while a value 01 is disposed in operand[2] section. Further, a specific value such as a maximum value is disposed in sections of operand[3] and the following.

Next, a command and a response requesting to change the version will be described. FIG. 12 is a diagram showing data structure of a command requesting to change the version and a response to that command. Data shown in FIG. 9 is disposed in a section between opcode and operand in the data block within a packet of the AV/C command shown in FIG. 7. The left side of this diagram shows the structure of a command while the right side shows the structure of a response to that command. In FIG. 12, an arrow indicating the left side on the side of a response indicates a case where data transmitted with a command is disposed just as it is and sent back.

Because a command requesting to change this version is a command for controlling the condition of a mating device, its command type is control (CONTROL) command. Data indicating VERSION (version) command is disposed in opcode section indicating the detail of the command. Version information (version information) for instructing to change is disposed in operand[0] section of the command. This version information is information indicating directly a version shown in FIG. 10. A specific predetermined value (here, maximum value FF of two-digit hexadecimal number) is disposed in operand[1]-[32] section. The change of the version mentioned here includes a case for changing the version to be set in a mating device to a lower level version as well as a case for changing it to a higher level version.

If the version can be changed to an instructed version, the type of a response from a side receiving this command is accept (ACCEPTED). Data attached to the command (that is, data and indicating VERSION and version information) is disposed in opcode section and operand[0] section. Profile ID ( implementation profile ID) indicating a function which can be achieved by the changed version is disposed in operand[1]-[32] section. For this profile ID, information of the same type as the profile ID at the time of inquiry about version is used in FIG. 11.

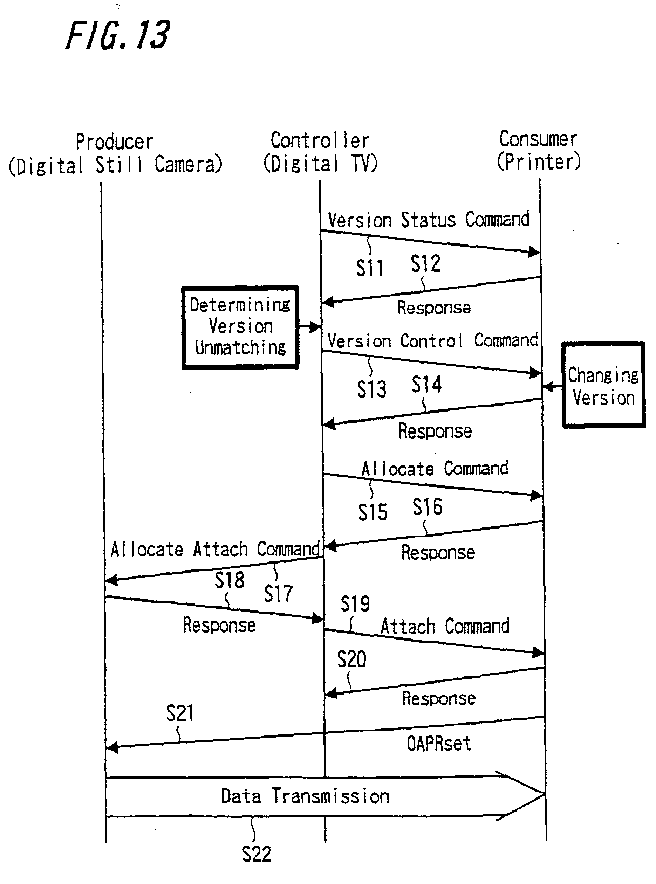

Next, an example in which the version inquiry command and version change command structured in the above way are transmitted between the respective devices will be described with reference to FIG. 13. In this example, still image data accumulated in the digital still camera 1 is transmitted to the printer 2 through the bus 9 and processed when the print is executed on the printer 2. The transmission of the still image data through the bus 9 is carried out in asynchronous transmission mode and establishment of a connection for carrying out transmission in asynchronous transmission mode is set up by a control of a controller (digital TV unit 3 in this case) prepared on the bus 9.

If the controller (digital TV unit 3) for controlling transmission recognizes that there is an instruction about print of the still image data accumulated in the digital still camera 1 through some operation, it transmits a command for confirming a version set in that consumer to the consumer (printer 2) (step S11). The consumer receiving this command transmits version information being set by a response to the controller when it can answer an inquiry about the version (step S12). The command and response for use in these steps S11, S12 have the data structure shown in FIG. 9.

The controller determines whether or not image data which the producer outputs can be handled by the consumer for print by comparing a version set in the producer which transmits the image data with a version of the consumer obtained through a response. In this determination, assume that the versions do not coincide with each other or image data outputted by the producer is determined to be a version which cannot be handled by the consumer. At this time, the controller transmits a command for changing the version to the consumer (step S13). In the version information attached to this command, a version (lower level version or high level version) which allows image data outputted by the producer to be handled is specified.

If the version can be changed to a specified version, the consumer receiving this command carried out a processing for changing to an appropriate version. That is, in case of the printer 2, the version is changed to low level version or high level version under a control of the CPU 204. When this change is carried out, information of the changed version is transmitted through a response to the controller (step S14). A command and a response of steps S13, S14 have the data structure shown in FIG. 12.

When the controller recognizes that the version is changed at the consumer through a response in step S14, a processing for establishing a connection between the producer and the consumer is carried out. In this processing for establishing the connection, allocate command is transmitted from the controller to the consumer (step S15) and a response thereto is sent back from the consumer (step S16) so as to set up input plug of the consumer. Next, the controller transmits allocate attach command to the producer (step S17) and a response thereto is sent back from the producer (step S18) so as to notify of information about input plug setting on the consumer side and set the output plug of the producer. Further, the controller transmits attach command to the consumer (step S19) and then, a response thereto is sent back from the consumer (step S20) so as to notify of information about output plug setting on the producer side.

If the processing up to here is carried out under control of the controller, the consumer sets output enable in output plug oAPR register of the producer (step S21). Data for setting this output plug is transmitted as data specified by asynchronous transaction of the IEEE1394 type (that is, not data of command format specified by the AV/C command).

If the processing up to here is terminated, the producer transmits data to the consumer by the unit of segment in asynchronous transmission mode through a set connection (step S22).

When the version of the producer does not coincide with the version of the consumer as a result of confirmation of the versions, the version is changed before data transmission. Thus, the setting condition of the consumer is turned to a condition suitable for data to be transmitted, so that the processing is carried out appropriately. In this case, the print is carried out by the printer which is a consumer.

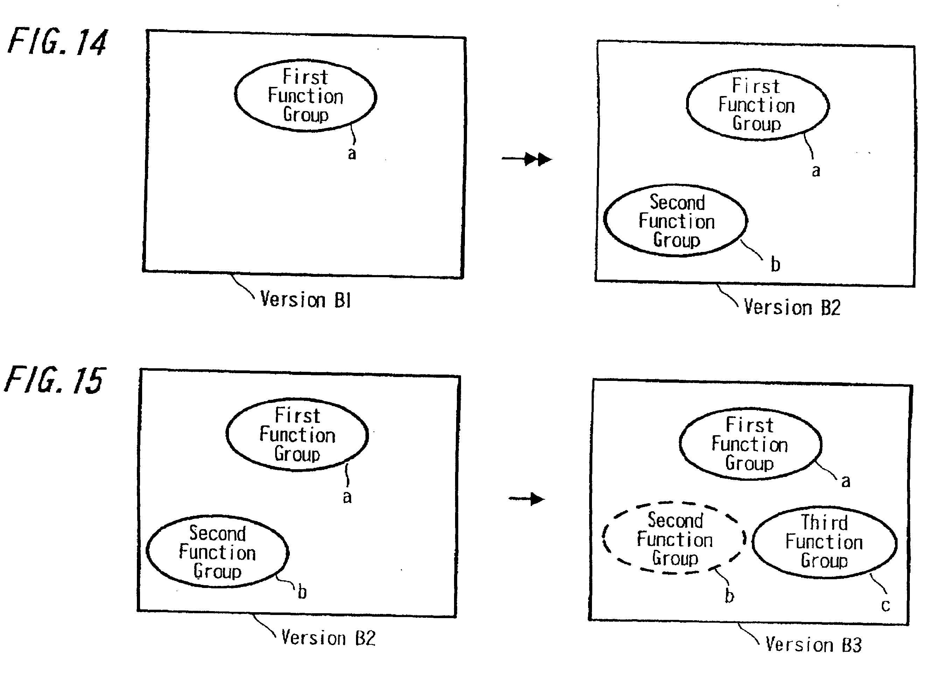

An example of changing the version set in device will be described. In case of updating of the version in which the version is changed to a higher-level version, in some case, updating with low-level compatibility is carried out and in some case, updating with low-level compatibility is carried out. An example of the updating with the low-level compatibility is shown in FIG. 14. Assume that when a version B1 to be set in a device has a first function group a, this version B1 is updated to a higher level version B2. At this time, assume that the updated version B2 includes a newly added function group b as well as the first function group a. At this time, it comes that the updating of the version with the low-level compatibility is achieved.

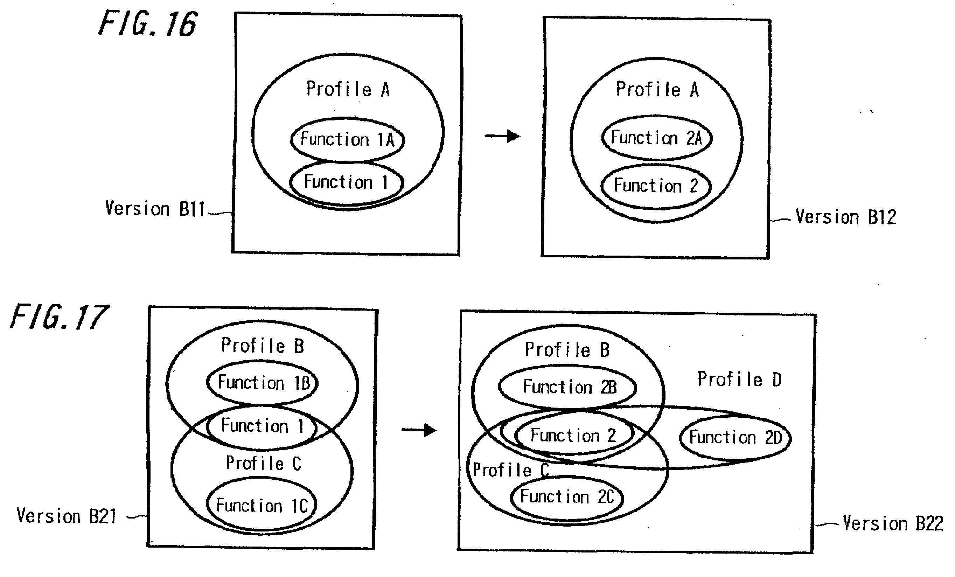

Assume that as shown in FIG. 15, when a version B2 set in a device contains a first function group a and a second function group b, this version B2 is updated to a higher-level version 3B. At this time, assume that the updated version B3 contains a third function group c as well as the first function group a provided since before. However, this third function group c is a function which cannot coexist with the second function group and the second function group is removed at the time of updating of the version.

In this case, the above described version change processing is carried out, in which when it is requested to use the second function group b, the controller sends a command for changing the version B3 to the version B2 which is a lower level version so as to enable the second function version b to be used. As an example in which the second function group b and the third function group c cannot coexist with each other, a case where the second function group b has a function for processing ID with 4-bit data and the third function group c has a function for processing ID with 8-bit data. In case of the printer, there is a case where function groups which cannot coexist from viewpoints of image data type and resolution.

For the version change processing to be capable of being executed as indicated in this example, a program in which plural versions are to be set up needs to be prepared in a memory within a device (printer 2 in the above example) whose version is instructed to be changed. If information necessary for changing the version is not prepared within a device, the information necessary for the version change may be transmitted from other device through the connected network. If a communication means enabling internet is connected, it is permissible to obtain a program necessary for the version change through that communication means.

Because in this example, the profile information is obtained with the version information, it is permissible to determine whether or not the version change is necessary from that profile information. An example of the version change with the profile will be described. Assume that as shown in FIG. 16, function 1 and function 1A attached to the function 1 are prepared in profile A prepared in version B11. At this time, assume that when the version B11 is changed to the version B12, the function which can be executed includes function 2 and function 2A attached to the function 2. Then, assume that the functions 2 and 2A are compatible with the functions 1 and 1A and if the profile A is not changed, updating with the profile is carried out. In this case, the version does not have to be changed to lower-level version.

Further, assume that as shown in FIG. 17, two profiles B, C are prepared in version B21 so that each of them uses function 1. Assume that the function 1B attached to the function 1 is a function necessary for achieving profile B and the function 1C attached to the function 1 is a function necessary for achieving profile C. Then, assume that when the version B21 is updated to the version B22, a new prorile D is added to this version. If the function 2 set in this version B22 and functions 2B, 2C attached to the function 2 maintain low-level compatibility with the functions 1B, 1C, the version does not have to be returned to its low-level version.

If when the version is changed to the version B21 in the example of FIG. 17, the profile C is deleted because the profile D is added, a processing for returning the version to its original state is required to regain the profile C, so that the version change processing shown in FIG. 13 is needed.

Although in a description up to here, a case where the version is changed to the low-level version has been described, if the version can be changed to its higher-level version, it is permissible to change the version to the higher-level version by transmitting the command as shown in FIG. 13. Further, it is also permissible to after the data transmission shown in FIG. 13 is achieved, carry out a processing for returning to the original version by transmitting a command for instructing version change from the controller.

Although in the transmission example of FIG. 13, the controller which is a different device from the producer dispatches an instruction for confirming or changing the version to the consumer, if the producer has a function as the controller, the producer can dispatch an instruction for confirming or changing the version directly to the consumer. Further, the controller may execute confirmation or change of the version for the producer using the same command.

Although in the above described embodiment, when the controller determines that the version change is necessary after the version is confirmed, the version change command is transmitted immediately, it is permissible to inquire an appropriate device about whether or not the version change is possible before that. That is, in case of the AV/C command, SPECIFIC INQUIRY command for inquiry about presence/absence of support is prepared and whether or not the version change is possible is inquired using that command. Then, it is permissible to transmit the version change command only when it is determined that the version change is possible through a response to that command. If the version change is impossible, NOT IMPLEMENTED response is sent back.

Although in the above described embodiments, a case of the network structured with the IEEE1394 type bus has been described, the embodiments can be applied to case of carrying out the same data transmission between the devices connected through the other network. The devices to be connected in this case are not restricted to the aforementioned video device and printer.

According to the present embodiments, a change of the version of an input device connected through the network to a lower level version corresponding to an output device is automatically carried out based on an instruction from the controller. Therefore, it comes that the versions of the output device and input device do not coincide with each other as a result of execution for updating the input device. Thus, even if processing of data outputted from the output device by the input device is disabled, the processing of the input device is automatically restored by changing to the lower-level version based on control from the controller.

In this case, by attaching information about a function which can be executed in that version to return transmission from the input device corresponding to an instruction about inquiry of the version from the controller, it comes that the controller can determine a function which can be executed in an input device, so that version control by the controller can be carried out accurately.

Because information about function which can be executed in a changed version is attached when the input device sends back corresponding to an instruction for changing the version to a lower-level version, it comes that the controller can determine what processing is possible under the changed version.

Because the output device acts as the controller at the same time, the output device can determine whether or not the versions coincide with each other by inquiring the input device. As a result, the processing for making the versions of the output device and the input devices coincide with each other can be carried out easily.

Having described preferred embodiments of the present invention with reference to the accompanying drawings, it is to be understood that the present invention is not limited to the above-mentioned embodiments and that various changes and modifications can be effected therein by one skilled in the art without departing from the scope of the present invention as defined in the appended claims.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. A transmission method for transmitting data obtained in an output device connected to a predetermined network to the network from the output device and receiving the data by an input device connected to said network, comprising:
a step for the output device or a controller for controlling transmission on the network to send a first instruction for inquiring the version of a function set in said input device;
a step for receiving a return transmission corresponding to the first instruction and confirming the version set in said input device;
a version change instruction step of if the version set in the output device or the controller is lower than the version of the confirmed input device, sending a second instruction for changing the version set in said input device to a lower version to said input device; and
a step of after the set version is changed to a lower version by the second instruction, starting transmission of the data from the output device.

2. The transmission method according to claim 1, further comprising a step of, prior to the version change instruction step, inquiring whether or not changing of the version set in the input device to a lower version is possible.

3. The transmission method according to claim 1, wherein information about a function capable of being executed under the version is attached to return transmission from the input device corresponding to the first instruction.

4. The transmission method according to claim 3, wherein information about a function capable of being executed under the changed version is attached to return transmission from the input device corresponding to the second instruction.

5. A transmission system for transmitting data obtained in an output device using a set connection based on control of a controller connected to a predetermined network from the output device to said network and receiving the data by an input device connected to said network, wherein
said controller comprises an instruction issue means for issuing a first instruction for inquiring the version of a function set in said input device and a second instruction for changing the version set in said input device to a lower version,
said input device having a version control means for when said first instruction is received, sending back the set version and when said second instruction is received, sending back whether or not it is possible to change the set version to a lower version.

6. The transmission system according to claim 5, wherein the version control means of the input device attaches information about a function capable of being executed under the set version to return transmission corresponding to reception of the first instruction.

7. The transmission system according to claim 6, wherein the information about the function capable of being executed is information indicating that other device on the bus is provided with a function capable of transmitting data.

8. The transmission system according to claim 6, wherein the information about the function capable of being executed is information indicating provision of a function capable of receiving data from other device on the bus.

9. The transmission system according to claim 6, wherein the version control means of the input device attaches information about the function capable of being executed under the changed version to return transmission corresponding to reception of the second instruction.

10. The transmission system according to claim 4, wherein the output device acts as the controller at the same time.

11. A transmission control apparatus for controlling transmission on the network by transmitting data obtained in an output device connected to a predetermined network to the network from the output device and receiving the data by an input device connected to said network,
said transmission control apparatus further comprising an instruction issue means for issuing a first instruction for inquiring the version of a function set in said input device and a second instruction for changing the version set in said input device to a lower version.

12. The transmission control apparatus according to claim 11, wherein the instruction issue means attaches information for inquiring a function capable of being executed under the set version to the first instruction.

13. The transmission control apparatus according to claim 12, wherein the instruction issue means attaches information for inquiring a function capable of being executed under the changed version to the second instruction.

14. An input device for receiving data transmitted from an output device connected to a predetermined network to the network, further comprising a version control means for when a first instruction is received, sending back the set version and when a second instruction is received, sending back whether or not it is possible to change the set version to a lower version.

15. The input device according to claim 14, wherein the version control means includes a version change means for changing the version of the set input device.

16. The input device according to claim 15, wherein the version change means has a memory means for memorizing a program for changing the version.

17. The input device according to claim 15, wherein the version change means has an obtaining means for obtaining a program for changing the version from other device.

18. The input device according to claim 14, wherein the version control means attaches information indicating a function capable of being executed under the set version to return transmission corresponding to the first instruction.

19. The input device according to claim 18, wherein the version control means attaches information indicating a function capable of being executed under the changed version to return transmission corresponding to the second instruction when the version is capable of being changed according to the second instruction.
